Europäisches Patentamt

European Patent Office

Office européen des brevets

(11) Veröffentlichungsnummer: **0 083 755**

**A1**

(12) **EUROPÄISCHE PATENTANMELDUNG**

(21) Anmeldenummer: **82111589.6**

(22) Anmeldetag: **14.12.82**

(51) Int. Cl.³: **G 11 B 27/36**
**G 01 R 29/027**

(30) Priorität: **17.12.81 DE 3150061**

(43) Veröffentlichungstag der Anmeldung:
**20.07.83 Patentblatt 83/29**

(84) Benannte Vertragsstaaten:
**AT BE CH DE FR GB IT LI LU NL SE**

(71) Anmelder: **POLYGRAM GmbH**
**Harvestehuder Weg 1-4**
**D-2000 Hamburg 13(DE)**

(72) Erfinder: **Schulz, Dieter, Dipl.-Ing.**
**Seydlitzstrasse 4**
**D-3000 Hannover 1(DE)**

(74) Vertreter: **Mehl, Ernst, Dipl.-Ing.**
**Postfach 22 01 76**
**D-8000 München 22(DE)**

(54) **Verfahren zur Ermittlung von Störimpulsen bei auf Tonträgern aufgezeichneten Signalen.**

(57) Die Erfindung betrifft eine für die Qualitätsprüfung von Schallplatten bei deren Herstellung geeignete Methode zur Diskriminierung von knackartigen Störsignalen bei der Wiedergabe der gespeicherten Toninformation, und zwar unter Berücksichtigung einer perzeptiven Bewertung, die das Abhören der ermittelten Störungen durch eine besondere Person erübrigt. Hierzu wird vorgeschlagen, die abgetasteten Tonsignale (sig1, sig2) nach ihrer Entzerrung und Verstärkung zunächst über ein empirisch dimensioniertes Bewertungsfilter (BF1, BF2) zu schicken und anschliessend zur sicheren Trennung von Nutzsignalen und Störsignalen die Spannungsspitzenwerte (Signalspannung s2) des gleichgerichteten. Signals schrittweise und fortlaufend bei Synchronisation mit den genannten Spannungsspitzenwerten in eine Speichereinrichtung (SP, LK) einzulesen und unter Anwendung eines Zeitfensters mit jedem weiteren Schritt gleichzeitig in der Ordnung der Einspeicherung der Spannungsspitzenwerte jeweils drei aufeinanderfolgende Spannungsspitzenwerte (Signalspannungen s1, s2 und s3) getrennt wiederum auszulesen. Für die Auswertung sind dabei jeweils der erste und dritte Spannungsspitzenwert dem Nutzsignal und der jeweils zweite Spannungsspitzenwert der möglichen Störung zugeordnet.

./...

FIG 1

0083755

Polygram GmbH
Harvestehuder Weg 1-4
2000 Hamburg 13

Unser Zeichen
VPA 81 P 9507 E

Verfahren zur Ermittlung von Störimpulsen bei auf Tonträgern aufgezeichneten Signalen

Die Erfindung bezieht sich auf ein Verfahren zur Ermittlung von Störimpulsen bei auf Tonträgern aufgezeichneten Signalen, bei dem das vom Tonträger abgetastete Signal entzerrt, verstärkt und im Anschluß an eine Gleichrichtung auf die Erfassung von Störimpulsen hin ausgewertet wird.

Insbesondere bei der Herstellung von Schallplatten sind ständig stichprobenartige Qaulitätsprüfungen erforderlich, bei denen festzustellen ist, ob das abgetastete und wiedergegebene Tonsignal frei von unerwünschten knackartigen Geräuschen ist. Bei einer solchen Qualitätsprüfung geht es dabei nicht nur darum, derartige knackartigen Geräusche einwandfrei zu selektieren, sondern auch darum, sie daraufhin zu bewerten, ob sie und gegebenenfalls in welchem Umfang als Störung empfunden werden.

Durch die DE-PS 11 49 920 und 14 47 991 sind derartige Verfahren bekannt, bei der auftretende Störamplituden in Abhängigkeit vom Nutzpegel des Signals registriert werden. Die perzeptive Bewertung solcher impulsartigen Störgeräusche erfolgt dabei mittels einer diese Störgeräusche abhörenden Prüfperson. Abgesehen davon, daß diese bekannten Verfahren für die perzeptive Bewertung ermittelter impulsförmiger Störgeräusche eine Prüfperson erforderlich macht, sind sie bei weitem nicht dafür geeignet, alle möglichen Störsituationen sachgerecht zu erfassen, die bei der Wiedergabe gespeicherter Toninformationen auftreten können.

Der Erfindung liegt die Aufgabe zugrunde, zur Ermittlung von Störimpulsen bei auf Tonträgern aufgezeichneten Signa-

0083755

len ein weiteres Verfahren anzugeben, bei dem mit hoher Wahrscheinlichkeit alle nur möglichen Störereignisse mit knackartigem Charakter mit hoher Sicherheit erfaßt werden und darüber hinaus gleichzeitig eine der Wahrnehmung entsprechende Bewertung vorgenommen wird.

Diese Aufgabe wird für ein Verfahren der einleitend erwähnten Art durch die im Kennzeichen des Patentanspruchs 1 angegebenen Verfahrensschritte gelöst.

Der Erfindung liegt die Erkenntnis zugrunde, daß sich eine stets einwandfreie Trennung einer impulsartigen Störung vom eigentlichen Nutzsignal dadurch herbeiführen läßt, daß der vermutlich eine Störung darstellende Spannungsspitzenwert stets mit Spannungsspitzenwerten der Vor- und Nachmodulation verglichen wird. Der aus den Spannungsspitzenwerten der Vor- und Nachmodulation gebildete Bezugsspannungswert berücksichtigt dabei sowohl in einer ersten Komponente ein Spannungsmaximum dieser Vor- und Nachmodulation als auch in einer zweiten aus dem Be-trag der Differenz der Spannungsspitzenwerte der Vor- und Nachmodulation bestehenden Komponente einen eventuell vorhandenen Oberwellenreichtum des Nutzsignals. Die hier zugleich erreichte perzeptive Bewertung der zu ermittelnden Störimpulse wird vor allem durch das auf der Eingangsseite des zu untersuchenden Tonsignals vorgesehenen empirisch dimensionierten Bewertungsfilter erreicht.

Zur weiteren Verbesserung der perzeptiven Be-wertung bei der Diskriminierung der Störimpulse ist der Bezugsspannungswert zusätzlich eine Funktion der differentiellen Signaldynamikabnahme (Ausklang), wodurch der physiologischen Eigenschaft des Ohres hinsichtlich Verdeckungseffekten Rechnung getragen wird.

Weiterhin ist es vorteilhaft, wenn der Bezugsspannungswert zusätzlich durch einen einstellbaren Festspannungswert mitbestimmt ist, der die Hörschwelle des menschlichen Ohres für die Wahrnehmbarkeit von Störimpulsen berücksichtigt.

Weitere vorteilhafte Ausgestaltungen der Erfindung sind in den Ansprüchen 4 bis 7 angegeben.

Anhand von in der Zeichnung dargestellten Ausführungsbeispielen soll die Erfindung im folgenden noch näher erläutert werden. In der Zeichnung bedeuten

Figur 1 das Blockschaltbild einer nach dem Verfahren nach der Erfindung arbeitenden Anordnung zur Diskrimination und perzeptiven Bewertung von impulsartigen Störgeräuschen eines abgetasteten Stereosignals,

Figur 2 die Wirkungsweise der Schaltung nach Figur 1 näher erläuternde Zeitdiagramme,

Figur 3 eine Schaltungsvariante der Schaltung nach Figur 1 zur Ermittlung von nach verschiedenen Gradstufen empfundener Lästigkeit bewerteten Störimpulsen.

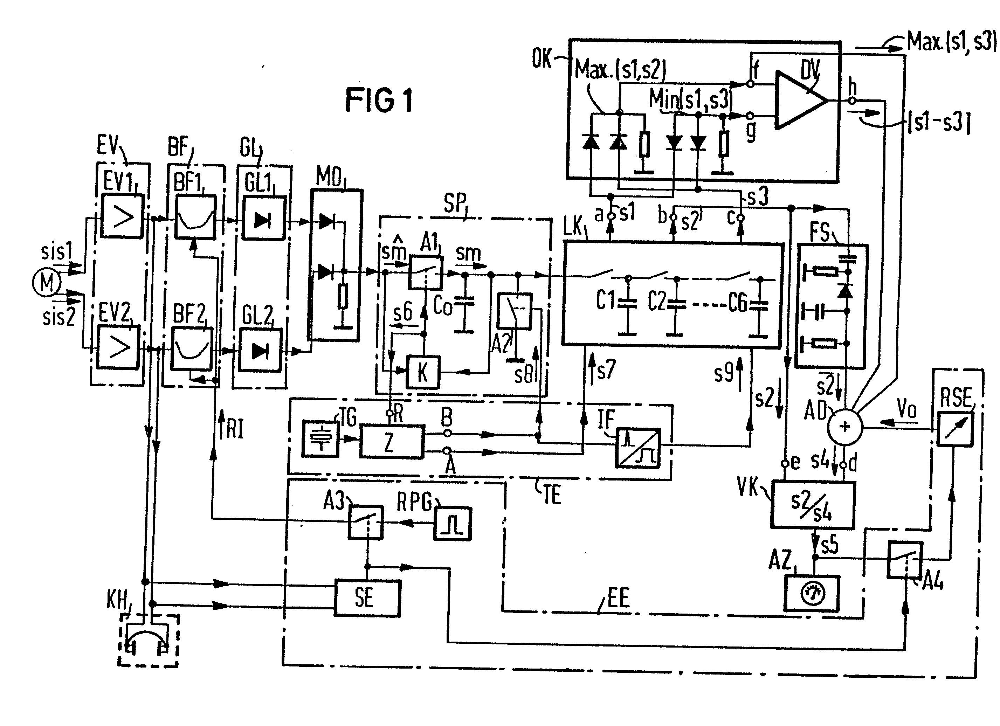

In der Meßanordnung nach Fig. 1 bedeutet M das eine Stereoschallplatte abtastende Magnetsystem. Die Tonsignale sig 1 und sig2 des linken und des rechten Kanals werden jeweils über einen Entzerrer-Verstärker EV1 und EV2 der Entzerrer-Verstärkeranordnung EV und ein empirisch dimensioniertes Bewertungsfilter BF1 und BF2 der Bewertungsfilteranordnung BF der Gleichrichteranordnung GL mit den kanaleigenen Gleichrichtern GL1 und GL2 zugeführt. Ausgangsseitig steht die Gleichrichteranordnung GL mit dem Maximumdetektor MD in Verbindung, der den jeweils größten Spitzenwert der Signalspannung $\hat{s}m$ des linken und rechten gleichgerichteten Stereokanals dem Spitzenwertspeicher SP zuführt.

0083755

Der eigentliche Speicher des Spitzenwertspeichers SP besteht aus dem Kondensator Co, der über den Schalter A1 im geschlossenen Zustand auf den Spitzenwert der Signalspannung $\hat{s}m$ am Ausgang des Maximumdetektors MD aufgeladen wird und diesen Spannungsspitzenwert solange speichert, bis der Kondensator Co mittels des ihm parallel liegenden Schalters A2 kurzgeschlossen und damit entladen wird. Die am Kondensator Co anliegende Signalspannung ist mit sm bezeichnet. Der Schalter A1 wird vom Ausgang des Spitzenwertspeichers SP immer dann geschlossen, wenn der Komparator K beim Vergleich der an seinen beiden Eingängen anstehenden Signalspannungen $\hat{s}m$ und sm feststellt, daß die Signalspannung $\hat{s}m$ größer ist als die Signalspannung sm. Gleichzeitig wird mit dem Ausgangssignal s6 des Komparators K der Zähler Z über den Reseteingang R in seine Zählausgangsstellung rückumgesetzt. Der Zähler Z ist Teil der Takterzeugung TE, die außer dem Zähler den Taktgenerator TG und die Impulsformerstufe IF aufweist.

Der Taktoszillator führt dem Zähler Z ständig Taktimpulse zu, die ihn veranlassen, bei der ersten Zählstellung am Ausgang A ein impulsförmiges Steuersignal s7 abzugeben. In gleicher Weise gibt der Zähler Z bei einer weiteren, über die erste Zählstelle hinausgehenden Zählstellung am Ausgang B ein impulsförmiges Steuersignal s8 ab, mit dessen Hilfe der Schalter A2 kurzzeitig zur Entladung des Kondensators Co geschlossen wird. Ob der Zähler Z die erwähnte erste oder zweite Zählstellung, bei der er am Ausgang A bzw. B ein Steuersignal abgibt, erreicht oder gar darüber hinaus bis zu seiner Ausgangszählstellung weiterzählt, hängt davon ab, wie lange am Ausgang des Komparators K kein Signal s6 auftritt.

Das Signal s6 stellt gleichsam ein Synchronisiersignal für die Takterzeugung TE dar, das den Beginn eines Zählzyklus des Zählers Z stets in dem Zeitpunkt erzwingt, in dem die Signalspannung sm am Kondensator Co die Signalspannung $\hat{sm}$ am Ausgang des Maximumdetektors MD überschreitet und damit das Signal s6 verschwindet. Der Zähler Z ist im Zusammenwirken mit dem Taktgenerator TG so ausgelegt, daß er bei fehlendem Signal s6 am Reseteingang R einen Zyklus von etwa 2,8 usec aufweist und damit die Schrittbreite festlegt, in der die Spitzenwerte darstellende Signalspannung sm in der dem Spitzenwertspeicher SP nachgeschalteten Laufzeitkette LK über die Kondensatoren C1, C2 ... C6 weitergeschaltet werden. Die zwischen den Kondensatoren C1, C2...C6 angeordneten, nicht näher bezeichneten Schalter werden hierbei im Wechsel vom Steuersignal s7 am Ausgang A des Zählers Z und vom Steuersignal s9 betätigt. Das Steuersignal s9 ist dabei das am Ausgang B des Zählers auftretende Steuersignal s8 nach seiner Umformung in einen breiteren Impuls im Impulsformer IF.

Die Laufzeitkette LK hat drei Ausgänge a, b und c, an denen die Signalspannungen s1, s2, s3 abgegriffen werden. Dabei stellt die Signalspannung s2 jeweils den zweiten Spannungsspitzenwert in der Folge von drei Spannungsspitzenwerten der Signalspannung sm am Kondensator Co des Spitzenwertspeichers SP dar, während die Signalspannungen s1 und s3 den jeweils ersten und dritten Spannungsspitzenwert der genannten Gruppe bilden. Die Laufzeitkette LK stellt gleichsam ein drei Zeitschritte umfassendes Zeitfenster dar, an dem die Folge von Spannungsspitzenwerten der Signalspannung sm vorbeigeschoben werden.

Im Operatorkreis OK, der aus Dioden, Widerständen und einem Differenzverstärker DV mit den Eingängen f und g besteht, werden einerseits das Maximum aus den Signalspannungen s1 und s3 und andererseits der Betrag aus der Differenz der Signalspannungen s1-s3 gebildet und beide Signale dem Addierer AD zugeführt. Der Addierer AD erhält weiterhin ein in der Formerstufe FS nach Maßgabe der

0083755

abfallenden Flanke der Signalspannung s2 abgeleitetes
Signal $\overline{s2}$, das eine Funktion der differentiellen Dynamikabnahme (Ausklang) ist.

Ferner wird dem Addierer AD über einen zusätzlichen Eingang
der Festspannungswert VO zugeführt.

Zum Vergleich werden der jeweils zweite Spannungsspitzenwert entsprechend der Signalspannung s2 und das die zugehörige Bezugsspannung s4 darstellende Summensignal am Ausgang des Addierers AD dem Vergleichskorrelator VK an den
Eingängen d und e zugeführt. Der Vergleichskorrelator VK
bildet das Verhältnis aus der Signalspannung s2 zur Bezugsspannung s4 und gibt    nur dann ein Signal s5 an die Anzeigevorrichtung AZ ab, wenn die Signalspannung s2 die zugehörige Bezugsspannung s4 überschreitet. Die Anzeigevorrichtung AZ zeigt den Wert des Signals s5 > 1 an. Die
Größe des Ausschlags entspricht dabei der Größe der perzeptiv bewerteten Störung.

Der Festspannungswert VO ist dadurch festgelegt, daß bei
fehlendem eingangsseitigen Tonsignal sig 1 und sig 2 am
Ausgang des Vergleichskorrelators VK nur dann ein Signal
s5 auftritt, wenn ein auftretender Störimpuls die Hörschwelle des menschlichen Ohres überschreitet. Zur Einstellung und Überprüfung mit gegebenenfalls nachfolgender
Korrektur des so festgelegten Festspannungswertes VO ist
die Eichvorrichtung EE vorgesehen. Sie weist einen
Referenzpulsgenerator RPG auf, der über den Schalter A3
an den Eingang der Bewertungsfilter BF1 und BF2 der Bewertungsfilteranordnung BF angeschaltet werden kann.
Weiterhin enthält die Eicheinrichtung die Regelspannungserzeugung RSE, die steuereingangsseitig über den Schalter
A4 mit dem Ausgang des Vergleichskomparators VK verbunden
ist. Die Schalter A3 und A4 werden von einer Steuereinrichtung SE betätigt, die eingangsseitig mit einem Anschluß für einen Kopfhörer KH auf der Ausgangsseite der Entzerrer-Verstärkeranordnung EV verbunden ist. Die Steuereinrichtung SE ist so ausgelegt, daß sie bei länger fehlendem eingangsseitigen Tonsignal die Schalter A3 und A4 schließt und damit automatisch die Überprüfung und gegebenenfalls nachfolgende Neueinstellung des Festspannungswertes VO herbeiführt. Die vom Referenzpulsgenerator RPG abgegebenen Referenzimpulse RI sind in ihrer Amplitude so bemessen, daß bei richtiger Einstellung des Festspannungswertes VO gerade noch kein Signal s5 am Ausgang des Vergleichskomparators VK auftritt. Auf diese Weise ist sichergestellt, daß beispielsweise eine während des Betriebs auftretende Gleichspannungsdrift automatisch immer wieder ausgeregelt und damit die Meßeinrichtung neu geeicht wird.

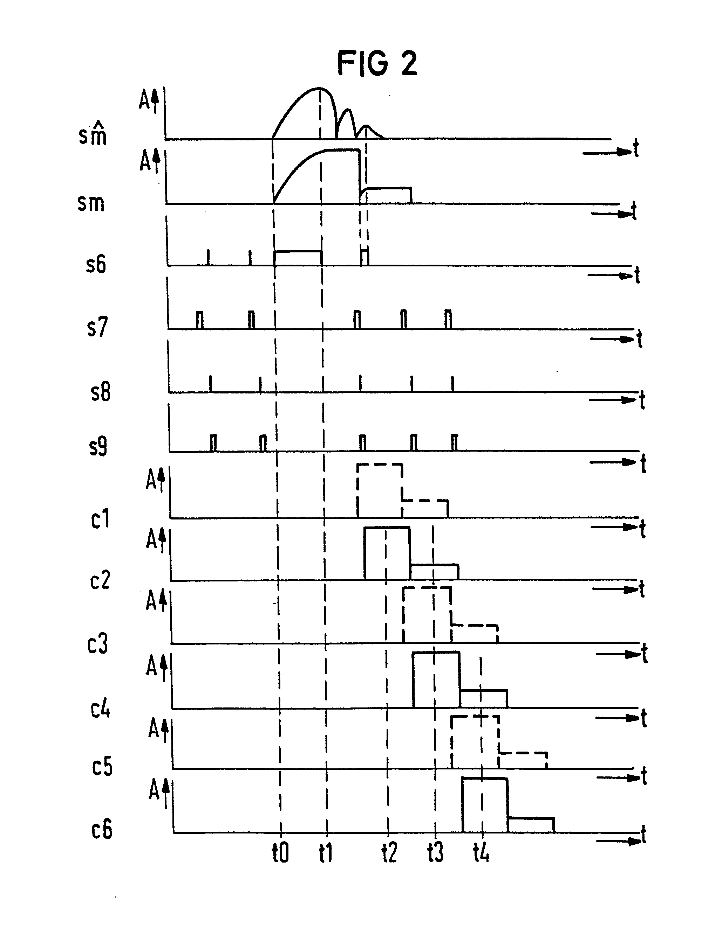

Zum besseren Verständnis der Wirkungsweise der Schaltungsanordnung nach Fig. 1 sind in Fig. 2 eine Reihe von einander zugeordneten Zeitdiagramme dargestellt, von denen die Diagramme $\hat{sm}$, sm, s6, s7, s8 und s9 die entsprechend bezeichneten Signalspannungen und Steuersignale in Fig. 1 für den Fall angeben, daß die eingangsseitigen Tonsignale sig 1 und sig 2 gerade auf den Wert Null abgeklungen sind und lediglich ein kurzzeitiges Störsignal vorhanden ist. Die weiteren Zeitdiagramme c1 bis c6 verdeutlichen die Arbeitsweise der Laufzeitkette LK und zeigen, wie die in die Laufzeitkette schrittweise einlaufenden Spitzenspannungswerte der Signalspannung sm in Abhängigkeit der Steuersignale s7 und s9 von Speicherkondensator zu Speicherkondensator weitergeschoben werden.

Das am Ausgang B des Zählers Z auftretende Steuersignal s8, mit dem der Schalter A2 nach Fig. 1 geschlossen und der Kondensator Co kurzgeschlossen wird, bewirkt auch bei nicht vorhandenem Tonsignal ein kurzzeitiges Ausgangssignal s6 des Komparators K aufgrund einer geringen Offsetspannung, so daß mit jedem Impuls des Steuersignals
s8 auch der Schalter A1 entsprechend den Impulsen des
Steuersignals s6 geschlossen und damit der Zähler Z über
den Reseteingang R in seine Anfangszähllage rückgesetzt
wird. Die Zeit, die der Zähler Z ausgehend von seiner Anfangszähllage bis zur Zählstellung bei der am Ausgang B
ein Impuls des Signals s8 auftritt, benötigt, beträgt
etwa 2,8 usec.

Im Zeitpunkt to zeigt sich die im Diagramm $\hat{sm}$ dargestellte
Störung an. Der Komparator K schließt damit über sein
Ausgangssignal s6 den Schalter A1 und hält ihn so lange
geschlosen, bis die Spitze der Störung erreicht bzw. überschritten wird. Mit dem Verschwinden des Signals s6 im
Zeitpunkt t1 beginnt der Zähler Z von seiner Anfangszählstellung in Richtung auf die Zählstellung zu zählen, bei
der er am Ausgang A einen Impuls des Steuersignals s7 abgibt. Mit dem Auftreten dieses Impulses wird der im Kondensator C entsprechend dem Diagramm sm festgehaltene
Spannungsspitzenwert in den Speicherkondensator c1 der
Laufzeitkette LK eingespeichert und unmittelbar darauf bei
Erreichen des Zählerstandes zur Abgabe eines Steuerimpulses am Ausgang B entsprechend dem Steuersignal s8 der Speicherkondensator Co über den Schalter A2 entladen.

Der Komparator K spricht damit wiederum an, setzt durch
das Steuersignal s6 einerseits den Zähler Z in seine Ausgangsstellung zurück und schließt andererseits den Schalter A1. Sobald im Speicherkondensator Co nach Diagramm sm
der Spitzenwert der Störung nach Diagramm $\hat{sm}$ erreicht ist,
verschwindet wiederum das Signal s6. Mit dem Steuersignal
s8 wird auch über den Impulsformer IF ein Steuersignal
entsprechend dem Diagramm s9 erzeugt, der den im Speicherkondensator c1 stehenden Spannungsspitzenwert nach Diagramm c2 in den Speicherkondensator c2 überträgt. Mit dem
nächsten auftretenden Steuerimpuls am Ausgang A des

O083755

Zählers Z nach Diagramm s7 wird der nunmehr in den Speicherkondensator Co entsprechend dem Diagramm sm eingespeicherte Spannungsspitzenwert in den ersten Speicherkondensator c1 der Laufzeitkette LK eingespeist. Im Rhythmus der weiteren Steuerimpulse nach den Diagrammen s7, s8 und s9 werden so die eingangsseitig der Laufzeitkette zugeführten Spannungsspitzenwerte der Signalspannung sm am Ausgang des Spitzenwertspeichers SP von Speicherkondensator zu Speicherkondensator durch die Laufzeitkette hindurchgeschoben.

In den Zeitpunkten t2, t3 und t4 befindet sich der die Störung markierende Spannungsspitzenwert jeweils in den Speicherkondensatoren c2, c4 und c6 der Laufzeitkette LK. Wird der Speicherkondensator c2 dem Ausgang a, der Speicherkondensator c4 dem Ausgang b und der Speicherkondensator c6 dem Ausgang c nach Fig. 1 zugeordnet, so ist den Diagrammen der Fig. 2 zu entnehmen, daß im Zeitpunkt t2 lediglich am Ausgang a der maximale Spannungswert der Störung auftritt, während an den Ausgängen b und c kein Signal auftritt. Im Zeitpunkt t3 tritt der Spannungsspitzenwert der Störung am Ausgang b auf, während der wesentlich kleinere Spannungsspitzenwert des folgenden Zeitschritts am Ausgang a ansteht. Am Ausgang c ist kein Signal vorhanden. Im Zeitpunkt t4 schließlich sind die beiden Spannungsspitzenwerte an den Ausgängen b und c vorhanden. Mit jedem durchgeführten zweifachen Verschiebungsschritt wird aus den Signalspannungen s1, s2 und s3 die zugehörige Bezugsspannung s4 entsprechend dem Summensignal am Ausgang des Addierers AD gebildet und gemeinsam mit dem Signal s2 am Ausgang b der Laufzeitkette LK im Verhältniskomparator VK zur eventuellen Abgabe eines eine Störung anzeigenden Signals s5 ausgewertet.

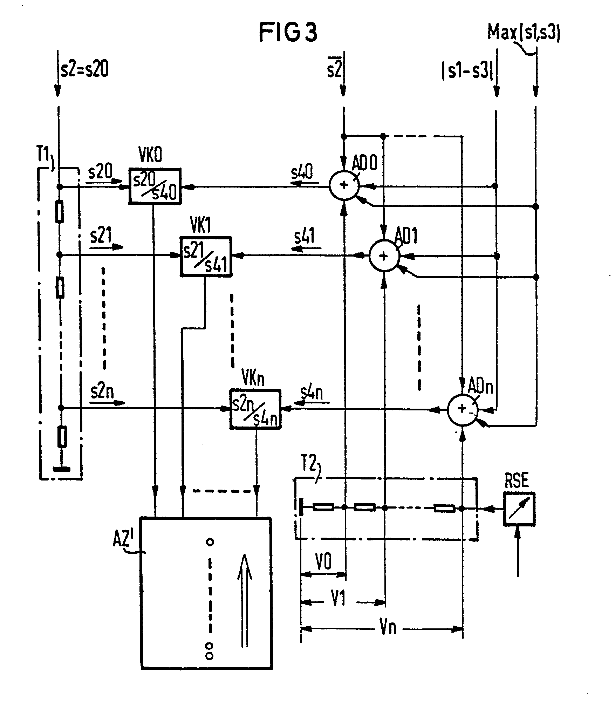

Fig. 3 zeigt schließlich eine Variante der Schaltungsanordnung nach Fig. 1 im Bereich des Vergleichskomparators VK. Wie die Praxis zeigt, ist es wünschenswert, auftretende Störimpulse nach Gradstufen empfundener Lästigkeit anzugeben, und gegebenenfalls diese nach solchen Gradstufen bewerteten Störimpulse digital weiterzuverarbeiten. In diesem Zusammenhang ist es sinnvoll, jeder Gradstufe empfundener Lästigkeit einen eigenen Vergleichskomparator $VK0$, $VK1 \ldots VKn$ zuzuordnen. Diese Vergleichskomparatoren stehen dann in aufsteigender Ordnung ihrer Indices für die Anzeige von Störimpulsen mit entsprechend stufenweise zunehmender Lästigkeitsempfindung.

In Fig. 3 wird hierzu die am Ausgang d der Laufzeitkette anstehende, die Störung markierende Signalspannung $s2$, die in Fig. 3 gleich der Signalspannung $s20$ ist, den verschiedenen Vergleichskomparatoren über einen Spannungsteiler $T1$ zugeführt, so daß dem einen Eingang des Vergleichskomparators $VK0$ die Signalspannung $s20$ und den einen Eingängen der weiteren Vergleichskomparatoren entsprechend gedämpfte Signalspannungen $s21 \ldots s2n$ zugeführt werden. In gleicher Weise wird den zweiten Eingängen der Vergleichskomparatoren eine von der Bezugsspannung $s40 = s4$ abgeleitete Folge von Bezugsspannungen $s40$, $s41 \ldots s4n$ zugeführt. Im Gegensatz zu den Signalspannungen $s20$, $s21 \ldots s2n$, deren Werte mit zunehmender Folge kleiner werden, nimmt die Folge von Bezugsspannung $s40$, $s41 \ldots s4n$ mit zunehmenden Indices zu. Dabei unterscheiden sich diese von der Bezugsspannung $s4$ abgeleiteten Bezugsspannungswerte lediglich durch eine unterschiedlich große Festspannungswertkomponente, die hierbei am Ausgang der Regelspannungserzeugung RSE den Wert $Vn$ aufweist. Dieser Festspannungswert $Vn$ wird über den Spannungsteiler $T2$ heruntergeteilt, so daß an den für die Abgabe der Bezugsspannung $s40$ vorgesehenen Addierer $AD0$ der Festspannungswert $V0$, für den die Bezugsspannung $s41$ abgebenden Addierer $AD1$ der Festspannungswert $V1$ und schließlich für den die Bezugsspannung $s4n$ abgebenden Addierer $ADn$ der größte Festspannungswert $Vn$ vorgesehen sind. Die den Bezugsspannungen zugeordneten Festspannungskomponenten sind

also umso größer gewählt, je größer die Ordnungszahl des Grades empfundener Lästigkeit eines zugeordneten Vergleichskomparators ist. Auf diese Weise wird berücksichtigt, daß die Hörschwelle für wahrzunehmende Störungen umso mehr absinkt, je höher der Pegel des Signals ist. Mit anderen Worten nimmt also die Empfindung der Lästigkeit eines Störimpulses bei fest vorgegebener Störamplitude umso mehr ab, je höher der Pegel des Nutzsignals ist, dem der Störimpuls überlagert ist.

Die Ausgänge der Vergleichskomparatoren VK0, VK1 ... VKn werden den n+1-Eingängen einer digitalen Anzeigevorrichtung AZ' zugeführt, die, wie bereits erwähnt worden ist, die von den einzelnen Vergleichskomparatoren gemeldeten Störungen digital weiterverarbeitet und gegebenenfalls mit einer Registriereinrichtung in Verbindung stehen kann.

7 Patentansprüche
3 Figuren

Patentansprüche

1. Verfahren zur Ermittlung von Störimpulsen bei mit Tonträgern aufgezeichneten Signalen, bei dem das vom Tonträger abgetastete Signal entzerrt, verstärkt und im Anschluß an eine Gleichrichtung auf die Erfassung von Störimpulsen hin ausgewertet wird,
d a d u r c h   g e k e n n z e i c h n e t ,
daß das abgetastete Tonsignal (sig 1, sig 2) vor seiner Gleichrichtung ein empirisch dimensioniertes Bewertungsfilter (BF1, BF2) durchläuft, daß ferner die Spannungsspitzenwerte (Signalspannung sm) des gleichgerichteten Signals schrittweise und fortlaufend bei Synchronisation mit den genannten Spannungsspitzenwerten in eine Speichereinrichtung (SP, LK) eingelesen und unter Anwendung eines Zeitfensters mit jedem weiteren Schritt gleichzeitig in der Ordnung der Einspeicherung der Spannungsspitzenwerte jeweils drei aufeinanderfolgende Spannungsspitzenwerte (Signalspannungen s1, s2 und s3) getrennt wiederum ausgelesen werden, von denen der in der Schrittfolge jeweils erste und dritte Spannungsspitzenwert dem Nutzsignal und der jeweils zweite Spannungsspitzenwert (Signalspannung s2) der möglichen Störung zugeordnet wird, daß außerdem dieser jeweils zweite Spannungsspitzenwert mit einem ihm jeweils zugeordneten Bezugsspannungswert (Bezugsspannung s4) verglichen wird, dessen Größe eine Funktion des Maximums des jeweils ersten oder dritten Spannungsspitzenwertes und eine Funktion des Betrages aus der Differenz des jeweils ersten und dritten Spannungsspitzenwertes ist und daß eine Störimpulsanzeige erfolgt, wenn der jeweils zweite Spannungsspitzenwert den zugehörigen Bezugsspannungswert überschreitet.

2. Verfahren nach Anspruch 1,
d a d u r c h   g e k e n n z e i c h n e t ,
daß der Bezugsspannungswert (Bezugsspannung s4) zusätzlich eine Funktion der differentiellen Signaldynamikab-

nahme (Signal $\overline{s2}$) (Ausklang) ist.

3. Verfahren nach Anspruch 1 oder 2,
d a d u r c h   g e k e n n z e i c h n e t ,
daß der Bezugsspannungswert (Bezugsspannung s4) zusätzlich durch einen einstellbaren Festspannungswert (V0)
mitbestimmt ist, der die Hörschwelle des menschlichen
Ohres für die Wahrnehmbarkeit von Störimpulsen bei ihrer
Ermittlung berücksichtigt.

4. Verfahren nach Anspruch 3,
d a d u r c h   g e k e n n z e i c h n e t ,
daß die Einstellung des Festspannungswertes (V0) wie
auch dessen Überprüfung und gegebenenfalls Neueinstellung in gewissen Zeitabständen von einer selbsttätig
arbeitenden Eicheinrichtung (EE) vorgenommen wird, die
mittels einer Steuereinrichtung (SE) bei länger andauernden Signalpausen einerseits signaleingangsseitig Referenzimpulse (RI) zuführt und gleichzeitig das die Referenzimpulse anzeigende Signal(s5) einer Regelspannungserzeugung (RSE) zuführt, die ausgangsseitig den genannten Festspannungswert abgibt und daß hierbei die Regelspannungserzeugung den ausgangsseitigen Festspannungswert in Richtung auf einen vorgegebenen Wert des die
Referenzimpulse anzeigenden Signals solange verändert,
bis dieser Wert erreicht ist.

5. Verfahren nach einem der vorhergehenden Ansprüche,
d a d u r c h   g e k e n n z e i c h n e t ,
daß zur Ermittlung von nach verschiedenen Gradstufen
empfundener Lästigkeit bewerteten Störimpulsen zueinander parallel Einzelvergleiche einer vom jeweils zweiten
Spannungsspitzenwert (Signalspannung s20) abgeleiteten
Folge von Spannungsspitzenwerten (Signalspannungen s21
... s2n)mit in der Folge abnehmender Größe und dem jeweils zweiten Spannungsspitzenwert (s2 = s20) zugeordneten Bezugsspannungswert (Bezugsspannung s4) durchgeführt werden.

6. Verfahren nach Anspruch 5,
d a d u r c h   g e k e n n z e i c h n e t ,
daß der vom jeweils zweiten Spannungsspitzenwert (Signalspannung s20) abgeleiteten Spannungsspitzenwertfolge (Signalspannungen s21 .. s2n) mit in der Folge abnehmender Größe für die hiermit durchzuführenden Einzelvergleiche eine entsprechende Bezugsspannungswertfolge (Bezugsspannungen s40, s41 .. s4n) mit in der Folge zunehmender Größe zugeordnet ist, die ihrerseits von dem dem jeweils zweiten Spannungsspitzenwert (Signalspannung s2) zugeordneten Bezugsspannungswert abgeleitet ist und daß sich die einzelnen Bezugsspannungswerte der Bezugsspannungswertfolge ihrer Größe nach durch unterschiedlich große Festspannungswertkomponenten (V0, V1 .. Vn) voneinander unterscheiden.

7. Verfahren nach einem der vorhergehenden Ansprüche zur Ermittlung von Störimpulsen bei auf Tonträgern aufgezeichneten Stereosignalen,
d a d u r c h   g e k e n n z e i c h n e t ,
daß nur der jeweils größere Spannungsspitzenwert (Signalspannung $\hat{s}m$) der gleichgerichteten Signale beider Kanäle in die Speichereinrichtung (SP, LK) eingelesen wird.

FIG 1

0083755

# FIG 2

FIG 3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| A | DE-A-2 837 245 (PLESSEY HANDEL UND INVESTMENTS AG) * Anspruch 1; Seite 4, letzter Absatz - Seite 5, Absatz 2 * --- | 1,3,7 | G 11 B 27/36 G 01 R 29/027 |
| A | DE-A-2 263 396 (LICENTIA PATENT-VERWALTUNGS-GMBH) * Anspruch 1; Seite 4, letzter Absatz - Seite 6, Absatz 1 * --- | 1,3,7 | |
| A | AT-B- 302 684 (BELL & HOWELL CO.) * Seite 2, Zeile 19 - Seite 3, Zeile 4 * --- | 1 | |
| D,A | DE-C-1 447 991 (DEUTSCHE GRAMMOPHON GMBH) * Ansprüche 1, 2, 4; Spalte 2, Zeilen 52-68 * ----- | 1 | RECHERCHIERTE SACHGEBIETE (Int. Cl ³) G 01 R 29/00 G 11 B 3/68 G 11 B 27/36 |

Der vorliegende Recherchenbericht wurde für alle Patentansprüche erstellt.

| Recherchenort BERLIN | Abschlußdatum der Recherche 10-03-1983 | Prüfer LEITHAEUSER R |
|---|---|---|